# FASCICULE DE BREVET EUROPEEN

(11) **EP 0 965 063 B1**
(45) Date de publication et mention de la délivrance du brevet: **27.08.2003**
(21) Numéro de dépôt: 98910808.9
(22) Date de dépôt: 20.02.1998
(51) Int. Cl.: G02C 9/04

(54) **ECRAN MONOCULAIRE POUR LUNETTES ET SON PROCEDE DE FABRICATION**
MONOKULARSCHIRM FÜR BRILLE UND VERFAHREN ZU SEINER HERSTELLUNG
MONOCULAR SHIELD FOR SPECTACLES AND METHOD FOR MAKING SAME

(30) Priorité: 06.03.1997 FR 9702890; 08.10.1997 FR 9712786
(43) Date de publication de la demande: 22.12.1999
(73) Titulaire: Locatelli, Daniel Joseph, 13620 Carry-le-Rouet (FR)
(72) Inventeur: Locatelli, Daniel Joseph, 13620 Carry-le-Rouet (FR)
(74) Mandataire: Domange, Maxime
(86) Numéro de dépôt international: FR9800345
(87) Numéro de publication internationale: WO98039681

(56) Documents cités:
- WO-A-97/19384
- DE-U- 9 216 919
- FR-A- 1 138 199
- FR-A- 2 538 920
- FR-A- 2 681 441
- US-A- 5 017 001
- US-A- 5 123 724

## Description

La présente invention a pour objet des accessoires optiques pour lunettes et leur procédé de fabrication.

Le secteur technique de l'invention est le domaine des accessoires optiques pour lunettes.

L'invention concerne les dispositifs optiques pour lunettes qui permettent d'adapter temporairement les caractéristiques des lunettes à des conditions particulières : à des conditions d'éclairement variable (par exemple pour l'utilisation des lunettes en montagne, en bord de mer, ou bien pour la conduite d'un véhicule automobile de nuit), ou bien à des conditions d'utilisation particulières des lunettes (par exemple pour le travail devant un écran d'ordinateur, ou bien pour protéger les yeux et les lunettes de chocs ou projections - par exemple, pour réaliser des travaux de soudure ou meulage).

Etant donné que les fabricants de monture ne proposent pas un écran (ou face supplémentaire) de forme adaptée à chaque monture mise sur le marché, et au surplus ne proposent pas un écran de caractéristique optique adaptée à chaque besoin, l'utilisateur des lunettes est confronté à un choix très limité ; du fait que la forme des faces supplémentaires proposées sur le marché n'est généralement pas adaptée à la forme de la monture des lunettes, le montage des faces supplémentaires sur les lunettes se fait avec un ajustement approximatif et résulte généralement en une mauvaise fixation ; en outre, les faces supplémentaires ne peuvent généralement pas être fixées aux lunettes pour enfants ; l'utilisateur des lunettes est donc confronté à un choix limité d'écrans, tant en termes de formes que de couleurs.

Le brevet US 5,017,001 décrit un écran monoculaire pour lunettes qui comporte trois attaches en résine synthétique, qui sont en forme d'arche et dotées d'une saillie centrale ; une portion frontale de l'attache est insérée dans une rainure prévue à la périphérie de l'écran, et une portion arrière de l'attache peut pincer la monture de lunettes recevant l'écran ; la fixation de l'attache au verre de l'écran est réalisée, soit par adhésif appliqué sur la face interne de la portion frontale de l'attache, soit en pratiquant des orifices dans la partie frontale de l'attache, dans la saillie centrale et dans la périphérie du verre ; dans ce cas, la fixation de l'attache utilise une pièce filiforme qui est introduite au travers des orifices et qui est solidarisée par collage ou par emmanchement forcé, à la manière d'une clavette ou d'une broche.

Cet écran est assemblé avec la paire de lunettes par un mouvement transversal et par un mouvement de pivotement ; à cet effet, les trois attaches sont disposées selon une configuration particulière.

Cet écran monoculaire présente des inconvénients : la réalisation de rainures à la périphérie du verre de l'écran nécessite un outillage spécifique tel qu'une meuleuse, et nécessite en outre une grande précision d'usinage pour obtenir une rainure dont la géométrie soit adaptée à celle de l'attache ; en outre, la réalisation de rainures débouchantes sur la périphérie du verre comporte des risques de détérioration du verre, notamment des risques de cassure, en particulier lorsque la rainure a un profil de forme anguleuse.

L'écran monoculaire décrit dans ce document peut difficilement être fixé à la monture de lunettes de façon stable, du fait de la position particulière des attaches rendue nécessaire par le mouvement particulier de solidarisation de l'écran monoculaire à la paire de lunettes, et en particulier à cause de la présence d'une attache supérieure en position sensiblement centrale et de deux attaches inférieures latérales ; cette disposition nécessite en outre un repérage précis et un mesurage précis de la hauteur des lunettes, pour adapter la position des attaches en fonction de la hauteur des lunettes, ce qui nécessite en outre un outil de mesure spécifique ; la configuration particulière des attaches décrites dans ce document entraîne qu'il est nécessaire de prévoir une attache de forme adaptée à chaque épaisseur de verre d'écran, afin de pincer le verre de l'écran entre la portion frontale de l'attache et la saillie centrale ; de la même manière, l'écran décrit dans ce document nécessite une attache de forme adaptée à chaque épaisseur de monture ou du verre de la paire de lunettes destinée à recevoir l'écran, afin de pincer par la cavité prévue entre la partie arrière latérale et la saillie de l'attache, la monture de lunettes.

Dans le mode de réalisation où cette attache est solidarisée au verre de l'écran monoculaire par une pièce filiforme formant une broche, c'est-à-dire dans le cas où cette attache est en deux parties, ceci nécessite en outre un usinage des orifices précis pour permettre l'alignement des orifices et autoriser la mise en place de la pièce filiforme formant la broche, et ceci entraîne en outre des difficultés particulières de manipulation d'une broche de taille très réduite.

Dans le cas où cette broche est collée, une difficulté supplémentaire consiste en un choix d'une colle compatible avec les trois matériaux qui peuvent être différents de l'attache, du verre de l'écran et de la broche elle-même ; dans ce cas, un problème supplémentaire résulte de la faible dimension des surfaces à encoller qui sont en outre très peu accessibles ; une difficulté et un inconvénient supplémentaire résultent également du mode de réalisation dans lequel la pièce filiforme formant broche est emmanchée en force dans les orifices prévus dans l'attache et dans le verre de l'écran monoculaire, compte tenu des très faibles dimensions de ces orifices et de cette broche ; en outre, ce document ne donne aucune précision sur les matériaux et les outils nécessaires pour obtenir un tel emmanchement forcé.

Le brevet US 5,123,724 décrit un procédé de fabrication d'un écran binoculaire pour lunettes.

Le document WO-A-9719384 montre un crochet formé d'une goupille élastique apte à s'étendre dans un orifice de l'écran, et d'une patte de fixation apte à chevaucher la tranche d'un verre ou d'une monture de lunettes.

Le document FR-A-1 138 199 montre des crochets formés aux extrémités d'un ressort constitué d'un fil métallique.

Le document DE-U-9216919 montre un crochet vissé dans un écran.

La présente invention a pour objet de procurer un dispositif de face supplémentaire monoculaire (ou écran monoculaire amovible) amélioré pour lunettes, et son procédé de fabrication.

Un objectif de l'invention est de procurer un dispositif amélioré de fixation d'un écran monoculaire sur des lunettes.

Selon un premier aspect, l'invention consiste à proposer un écran monoculaire amovible pour lunettes qui soit amélioré ; l'écran (ou face supplémentaire) est de préférence essentiellement constitué d'un verre taillé sur mesure et dont le contour externe est identique ou similaire au contour externe du verre équipant la paire de lunettes, contre lequel (ou à faible distance duquel) l'écran (ou verre) supplémentaire peut être positionné et maintenu par des moyens déformables de fixation amovible qui sont intégrés à l'écran et qui coopèrent avec le verre de lunette et/ou avec la monture.

Les moyens déformables de fixation amovible de l'écran monoculaire sur les lunettes sont des moyens de fixation mécanique essentiellement constitués par au moins deux et au plus quatre crochets (ou cavaliers ou pattes ou pinces), de préférence trois crochets, qui sont (en partie au moins et de préférence en totalité) déformables, pour permettre leur engagement (et inversement leur dégagement) autour du verre de lunette et/ou autour d'une partie de monture entourant le verre.

Selon une caractéristique préférée de l'invention, les deux parties d'extrémité du crochet et la partie centrale les reliant sont de forme allongée ou filiforme : leur longueur est telle que son rapport à la plus grande dimension de leur section transversale, est au moins égal à trois, par exemple voisin de 5 à 15 ou 20 ; cette forme allongée participe à la capacité de déformation du crochet, facilite la manipulation du crochet pour sa solidarisation à l'écran, et facilite l'adaptation du crochet à l'écran et à la paire de lunettes en procurant une partie d'extrémité sécable qui est coupée pour ajuster l'écran à la forme des lunettes, et pour ajuster le crochet au verre de l'écran.

De préférence, le crochet est constitué d'une seule pièce moulée en matière plastique de dureté appropriée, en particulier voisine de 90 à 95 shore A, qui comporte :
- une première extrémité apte à être fixée audit écran,
- une deuxième extrémité apte à être placée au contact de la zone périphérique d'un verre ou d'une partie de la monture, qui est allongée et coudée,
- une partie centrale coudée, qui est apte à chevaucher la tranche d'un verre de lunette ou une arcade de monture de lunettes ;

Ainsi, la partie centrale coudée et la partie d'extrémité coudée forment un « S », du fait de la présence des deux coudes successifs (c'est-à-dire voisins ou juxtaposés) de courbure inversée ; de préférence, ces coudes s'étendent sur plus de 90 degrés, de préférence sur 120 à 210 degrés pour le coude de liaison entre la partie centrale et l'extrémité, de préférence sur 150 à 270 degrés pour le coude inversé incorporé à ladite deuxième extrémité.

Selon une première variante préférée de réalisation, chaque crochet est fixé au verre de l'écran par emboîtement d'une extrémité du crochet dans un orifice percé dans (traversant) une partie périphérique du verre ; la liaison mécanique est obtenue par emboîtement d'une portion d'une extrémité du crochet, laquelle portion est prolongée à chacune de ses extrémités par une partie s'étendant à l'extérieur du verre et faisant saillie par rapport à ladite portion pour former une butée.

Selon un aspect, l'invention consiste donc à proposer un crochet pour la solidarisation (temporaire et/ou amovible) d'un écran monoculaire à des lunettes, pour positionner et maintenir l'écran en regard d'un verre de lunette, sensiblement contre la face avant ou bien la face arrière du verre, lequel crochet comporte :
- une première partie (ou première extrémité sensiblement rectiligne, de section non constante) apte à être fixée rigidement audit écran, dans une zone périphérique de celui-ci, qui comporte :
   - une portion (broche) apte à s'étendre au travers d'un orifice prévu à la périphérie de l'écran,
   - au moins une première butée et au moins une deuxième butée qui sont disposées de part et d'autre de ladite portion, et dont au moins une butée est déformable ou rétractable (de manière à être apte à traverser ledit orifice),
- une deuxième partie (ou partie centrale) déformable qui est apte à chevaucher la tranche d'un verre à lunette (notamment dans le cas d'une monture interrompue) et/ou à chevaucher une arcade de monture de lunettes, qui comporte une partie rectiligne de section constante, terminée à chaque extrémité par un coude de liaison avec une extrémité,
- une troisième partie (ou deuxième extrémité) coudée apte à être placée au contact de la zone périphérique d'un verre, ou bien d'une partie de la monture, qui est de section constante et qui prolonge le coude de ladite partie centrale selon une courbure inverse pour donner une forme de « S ».

De préférence, le crochet est monobloc (en une seule pièce) et allongé en forme générale de « U », de « L », de « R » ou de « S » ; il peut avoir aussi une forme « fantaisie » (par exemple, reproduction d'une main qui tient un objet, en l'occurrence l'écran,...) ; bien qu'il puisse être métallique (en partie au moins), le crochet est de préférence moulé en une matière sécable de dureté très inférieure à la dureté du matériau constitutif du verre telle qu'une matière plastique ; ceci permet une déformation facilitée de la (ou des) butées(s) prévues au voisinage de la portion d'emboîtement équipant la première extrémité du crochet ; le crochet peut être en polyuréthane injecté ; ceci permet sa fabrication à moindre coût, et facilite en outre son adaptation à diverses formes et dimensions de montures de lunettes ; cette adaptation est notamment obtenue par découpe d'une partie de sa deuxième extrémité.

Le crochet est de préférence coloré, par exemple de couleur noire, dorée, brune (écaille) ou bien est translucide.

Selon une deuxième variante préférée de réalisation, le crochet est collé au verre d'écran par sa première extrémité pour obtenir une fixation mécanique rigide du crochet, soit sur la tranche du verre d'écran, soit dans une partie périphérique de la face avant (ou bien de la face arrière) du verre d'écran ; dans ce cas, la première extrémité est de préférence sensiblement rectiligne et s'étend sensiblement perpendiculairement à la partie centrale ; dans cette deuxième variante, la section transversale des différentes parties du crochet peut être sensiblement constante, alors que pour la première variante, la section transversale des diverses portions de la première extrémité est différente d'une portion à l'autre.

Selon une troisième variante de réalisation, le crochet déformable est fixé à l'écran par rivet ou par vis.

Selon d'autres modes préférentiels de réalisation du crochet :
- lesdites première et deuxième extrémités du crochet, ainsi que la partie centrale les reliant, ont une section transversale dont l'aire est comprise entre 0,5 mm² et 5 mm², de préférence de l'ordre de 0,7 mm² à 2,5 mm² , notamment pour permettre une découpe facile d'une ou plusieurs extrémité(s) du crochet, et faciliter son adaptation à divers types, formes et épaisseurs de monture et de verres de lunettes ;
- ledit crochet ou ébauche de crochet est essentiellement constitué par un corps, plein, allongé et coudé, de section transversale non constante, de préférence de section transversale pratiquement rectangulaire.

Les attaches ou crochets conformes à l'invention comportent de nombreux avantages :

Grâce au fait que ces crochets sont moulés en une seule pièce, ils peuvent être réalisés à très faible coût et leur manipulation pour leur solidarisation à l'écran, ainsi que pour le montage de l'écran sur la paire de lunettes en est facilitée, en particulier dans le cas où on utilise des extrémités allongées en matériau sécable, qui avant d'être découpées, constituent des moyens facilitant la manipulation par l'opticien du crochet ; cette manipulation est particulièrement facilitée dans le cas où l'extrémité arrière du crochet conforme à l'invention est en forme de « S », ce qui facilite en outre l'engagement et le dégagement de l'écran sur la monture ; cette manipulation est encore facilitée par la forme allongée du crochet et le choix d'une section transversale dont la valeur s'étend dans une plage déterminée, et par l'utilisation d'un matériau très déformable du fait du choix d'une dureté dans une plage de valeur déterminée.

Dans la première variante de réalisation où le crochet comporte une broche s'emboîtant dans un orifice percé à la périphérie du verre et non débouchant sur cette périphérie, laquelle broche fait partie d'une extrémité effilée, on peut très facilement et manuellement sans aucun outil introduire l'extrémité effilée dans l'orifice prévu dans le verre d'écran monoculaire, puis en exerçant une traction sur cette extrémité effilée à l'aide d'une simple pince plate, on peut provoquer l'emboîtement de cette extrémité dans le verre et obtenir une liaison rigide de manière très simple ; grâce à une partie du crochet qui s'étend le long de la périphérie du verre de l'écran monoculaire et qui s'étend sensiblement dans le prolongement de la partie centrale du crochet, on permet en outre d'éviter la rotation du crochet par rapport à l'écran lorsque celui-ci est emboîté dans l'orifice percé dans l'écran ; la position des trois crochets dans un mode de réalisation préférentiel qui consiste en deux crochets supérieurs susceptibles de s'étendre à proximité du pontet et du tenon de la paire de lunettes et de l'unique crochet inférieur, permet en outre une fixation amovible très stable de l'écran monoculaire sur la monture de lunettes.

L'invention permet de procurer des écrans ou faces supplémentaires qui sont de forme et de taille adaptée à un type de monture déterminé ; parmi les autres avantages procurés par l'invention, on relève :
- la légèreté de l'écran monoculaire constitué d'un verre et de ses crochets d'attache,
- le faible coût, la facilité et la rapidité de réalisation de l'écran en fonction des besoins de chaque porteur de lunettes,
- l'attrait esthétique d'un écran de forme et de teinte adaptée,
- la possibilité de fabriquer les écrans à partir de tous types d'ébauche de verres, notamment de verres dont l'épaisseur peut varier de 0,5 millimètre à 5 ou 10 millimètres ; ceci permet notamment la réalisation d'écrans supplémentaires filtrants et/ou correcteurs,
- l'intérêt d'un écran monoculaire correcteur pour des personnes récemment opérées d'un seul oeil, notamment de la cataracte (pour une correction additionnelle provisoire, sans changer le verre antérieur à l'opération),
- la facilité de solidarisation (et inversement de désolidarisation) de l'écran et des lunettes par l'utilisateur, sans nécessiter d'outils,
- la possibilité de réaliser indifféremment un écran monoculaire se fixant devant le verre de lunette, ou bien derrière celui-ci : ce dernier cas est particulièrement avantageux pour les personnes atteintes d'hypermétropie, et portant des lunettes dont les verres correcteurs sont dotés d'une face arrière dont la courbure est inférieure à la courbure de la face avant ; on peut alors avoir intérêt à prévoir la fixation de l'écran contre la face arrière du verre correcteur.

Les écrans selon l'invention peuvent être très facilement fabriqués par un opticien ; cette facilité est encore accrue lorsqu'aucun collage des crochets sur l'écran n'est nécessaire ; en outre le perçage des orifices d'emboîtement à la périphérie du verre de l'écran est particulièrement facile à réaliser lorsque le verre est en polycarbonate.

Un résultat de l'invention est également de proposer un étui (souple ou rigide) qui comporte au moins un compartiment, de préférence au moins deux compartiments identiques, par exemple quatre ou six compartiments identiques, chaque compartiment étant spécialement prévu pour recevoir un écran monoculaire conforme à l'invention ; l'étui peut en outre comporter un logement pour la paire de lunettes à laquelle les écrans sont destinés.

Les nombreux avantages procurés par l'invention seront mieux compris au travers de la description suivante qui se réfère aux dessins annexés, qui illustrent sans aucun caractère limitatif des modes préférentiels de réalisation de l'invention.

Dans les dessins, les éléments identiques ou similaires portent, sauf indication contraire, les mêmes références d'une figure à l'autre.
La figure 1 illustre en vue latérale un mode préférentiel de réalisation d'un crochet en matière plastique entrant dans la constitution d'un écran monoculaire conforme à l'invention.
La figure 2 illustre une section transversale du corps du crochet de la figure 1 et est une vue selon II/II de cette figure.
La figure 3 est une vue en perspective schématique d'une paire de lunettes équipée d'un écran monoculaire conforme à l'invention.
La figure 4 est une vue latérale d'un écran monoculaire muni d'un crochet déformable collé sur la tranche du verre de l'écran.
Les figures 6 et 7 sont également des vues latérales de deux autres modes de réalisation d'écran monoculaire muni de crochets collés, tandis que la figure 9 illustre en vue frontale une paire d'écrans monoculaires conformes à l'invention, qui sont généralement symétriques.

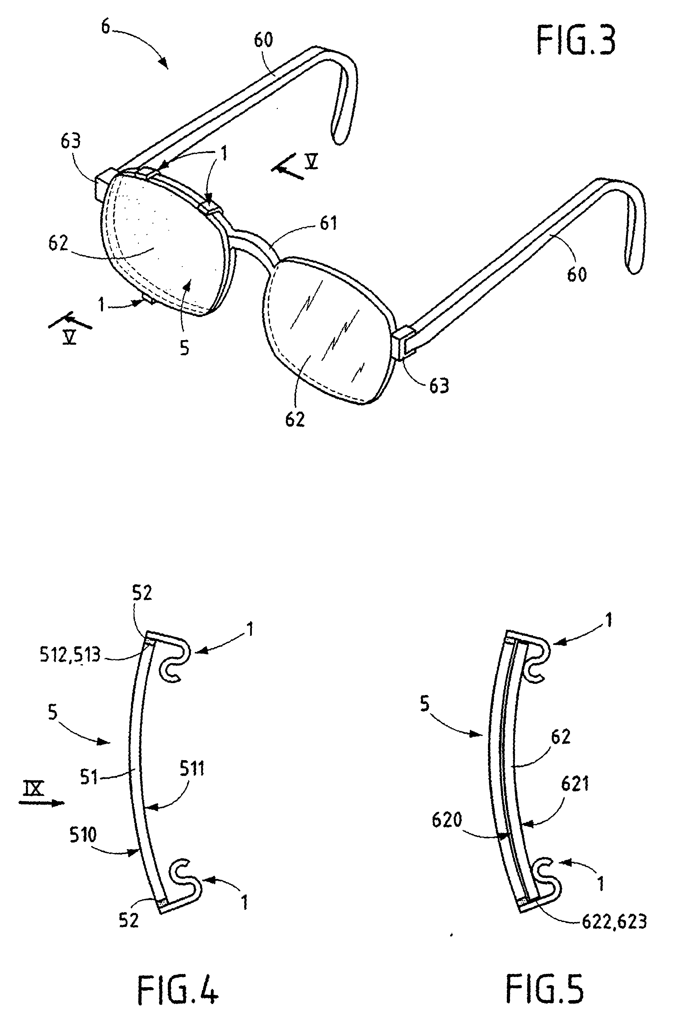

La figure 5 est une vue selon V/V de la figure 3 et illustre en coupe transversale schématique un écran monoculaire conforme à la figure 4 monté sur la face avant du verre d'une paire de lunettes.

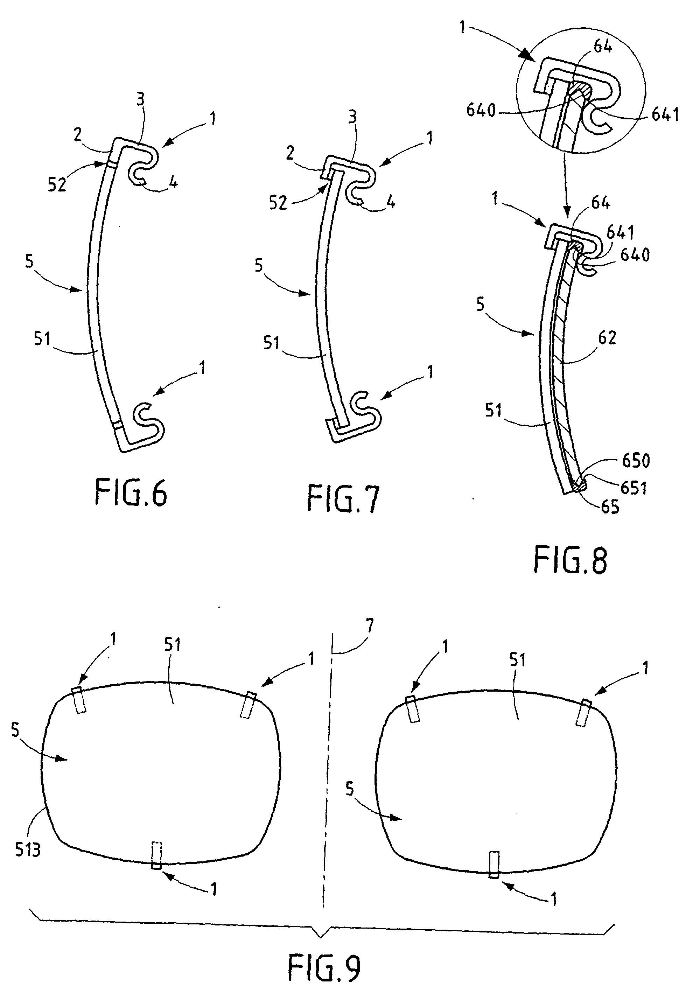

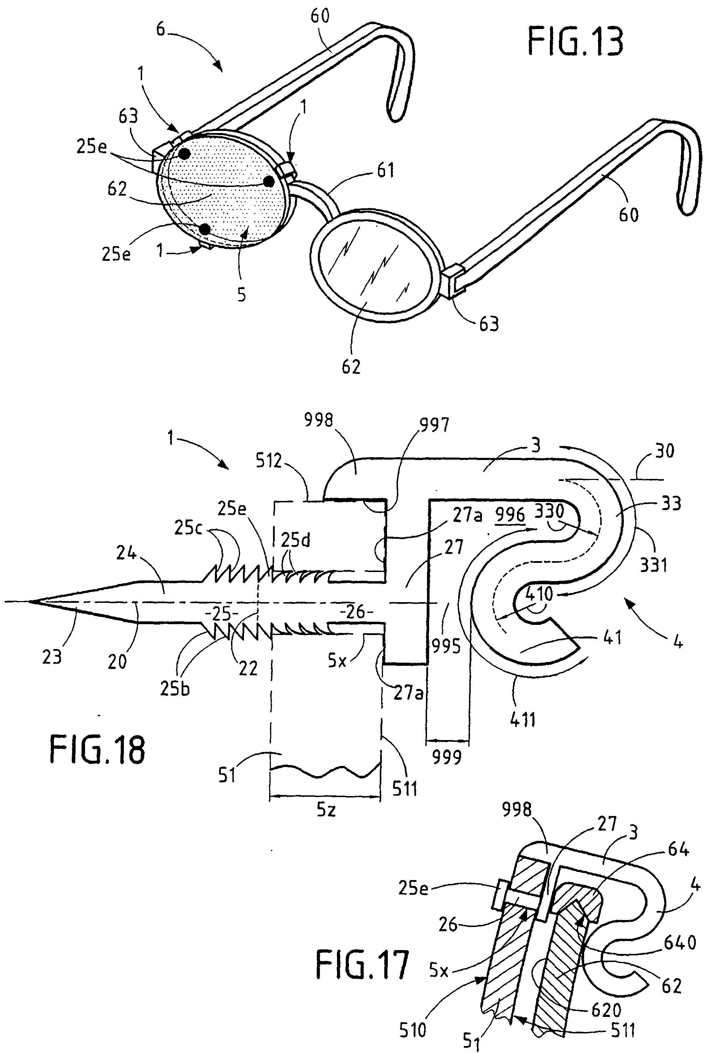

La figure 8 illustre de la même manière que la figure 5 le montage d'un écran monoculaire conforme à la figure 7, en partie avant d'une monture fermée, équipée d'un verre ; cette figure 8 est une vue selon VIII/VIII de la figure 16.
La figure 16 illustre en vue frontale partielle une paire de lunettes comportant une monture fermée et dont le verre droit est équipé d'un écran monoculaire conforme à l'invention.

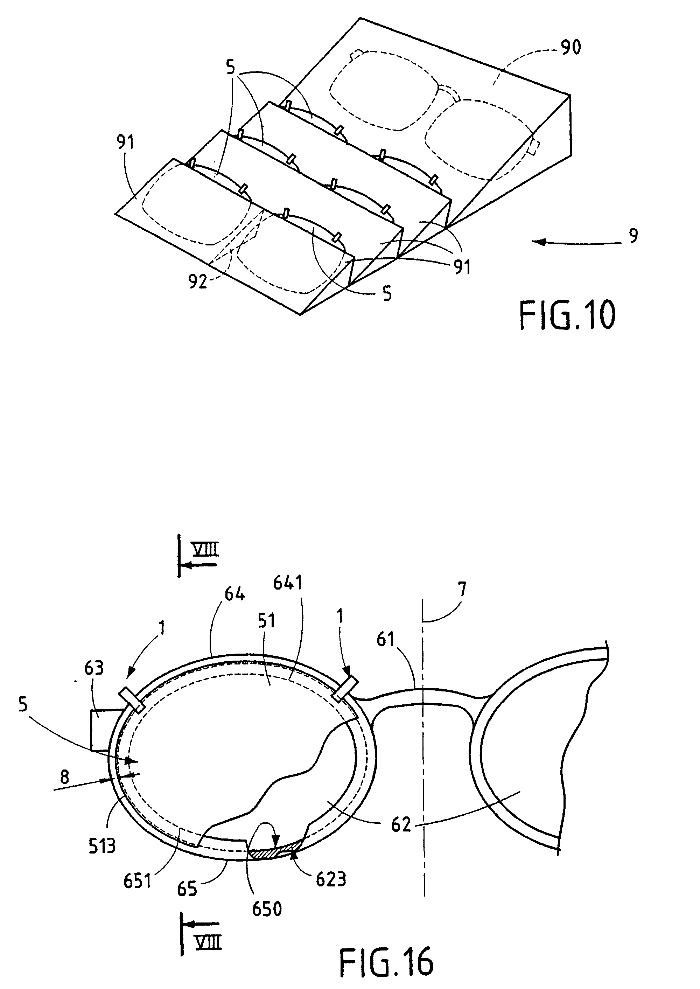

La figure 10 illustre schématiquement en perspective un étui à lunettes conforme à l'invention.

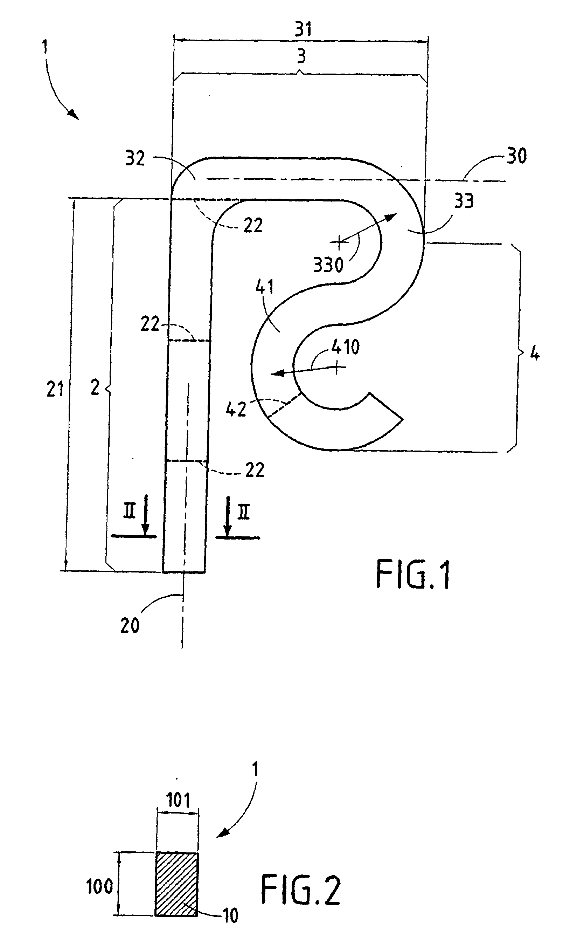

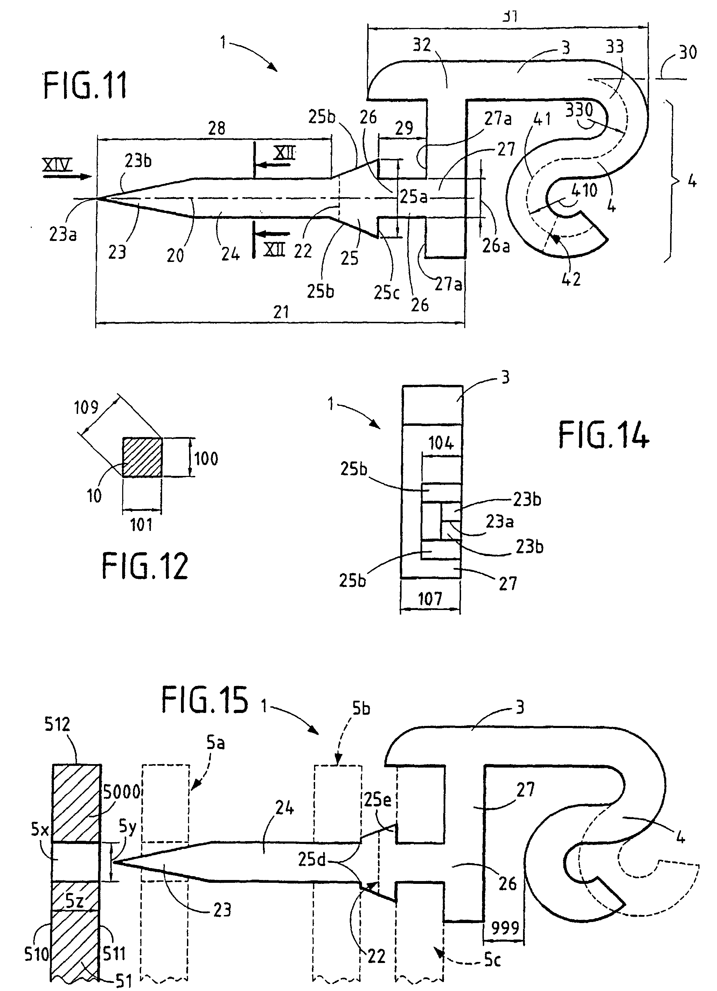

Les figures 1 à 9 et 16 sont particulièrement relatives à l'utilisation de crochets collés selon la deuxième variante de réalisation de l'invention ; les figures 11 à 15, 17 et 18 sont relatives à des crochets emboîtés dans des orifices percés dans l'écran.
La figure 11 illustre en vue latérale un mode préférentiel de réalisation d'un crochet en matière plastique à emboîtement entrant dans la constitution d'un écran monoculaire conforme à l'invention.
La figure 12 illustre une section transversale du corps du crochet de la figure 11 et est une vue selon XII/XII de cette figure.
La figure 13 est une vue en perspective schématique d'une paire de lunettes équipée d'un écran monoculaire équipé de crochets emboîtés.
La figure 14 est une vue frontale du crochet de la figure 11 et est une vue selon XIV de cette figure.
La figure 15 illustre en vue latérale les phases successives (correspondant aux positions repérée 5a à 5c du verre) d'une opération de solidarisation par emboîtement d'une extrémité d'un crochet identique à celui des figures 11 et 14, dans un orifice percé dans le verre 51, pour former un écran.
La figure 17 illustre en coupe transversale schématique partielle, à échelle agrandie, le montage d'un écran monoculaire en partie avant d'une monture fermée.
La figure 18 illustre en vue latérale une variante de réalisation de crochet à emboîtement spécialement adapté à des écrans épais.

Par référence aux figures 3 et 16 particulièrement, l'invention s'applique à des lunettes 6 comportant une monture comportant elle-même deux bras 60, deux verres 62 (généralement symétriques par rapport à un axe 7 de symétrie de la paire de lunettes) et un pontet 61 reliant les parties gauche et droite de la paire de lunettes ; un tenon 63 assure la liaison de chaque bras 60 de la monture avec le verre 62 de la paire de lunettes et/ou la partie frontale de la monture.

Dans le cas de la figure 3, la monture est interrompue et chaque verre 62 assure la liaison mécanique entre le pontet 61 et le bras 60 par l'intermédiaire du tenon 63 ; dans le cas de la monture illustrée figures 13 et 16, chaque partie gauche et droite de la face avant de la monture comporte une partie généralement dénommée « arcade » 64, s'étendant entre le tenon 63 et le pontet 61, au-dessus du verre 62 et ceinturant la partie supérieure de celui-ci, laquelle arcade 64 est prolongée dans la partie inférieure du verre 62 par une ceinture 65 cerclant la périphérie inférieure du verre 62, comme également illustré figure 8.

Chaque écran monoculaire 5 conforme à l'invention est constitué d'un verre 51 dont la concavité est généralement proche de (sinon identique à) la concavité du verre 62 de la paire de lunettes auquel est destiné l'écran 5, lequel écran comporte en outre au moins deux crochets 1, de préférence trois crochets répartis sur la circonférence de chaque écran 5, lequel crochet permet le maintien de l'écran en regard du verre 62 correspondant de la paire de lunettes, en partie avant de celui-ci, comme illustré aux figures 3, 5, 8, 13, 16 et 17 (bien que l'invention permette également le montage de l'écran en arrière du verre 62 de la paire de lunettes).

Dans le mode de réalisation illustré aux figures 4, 5, 6 et 9, chaque crochet 1 est fixé rigidement par collage à l'aide d'une goutte 52 de colle de formulation adaptée, sur la tranche 512 du verre 51 de l'écran 5 ; alternativement, comme illustré figures 7 et 8 particulièrement, le crochet 1 peut être fixé rigidement au verre 51 par une goutte 52 de colle, en partie périphérique de la face frontale ou face avant 510 (qui est généralement convexe) du verre 51.

En position de montage, la face arrière 511 du verre 51 de l'écran 5 s'étend en regard de la face avant 620 du verre 62 de la paire de lunettes, contre celui-ci ou à faible distance de celui-ci, selon que la monture de lunettes comporte ou non des arcades et selon l'épaisseur de l'arcade 64 et de la ceinture 65 (figure 8) et/ou de la portion 27 de l'extrémité 2, qui joue un rôle d'entretoise d'espacement entre le verre d'écran et le verre de lunette (figure 17).

Comme illustré figures 3, 13 et 16 notamment, le contour 513 du bord périphérique externe et/ou de la tranche 512 du verre 51 de l'écran 5, s'étend selon un tracé identique ou similaire au tracé du contour 623 du bord ou de la tranche 622 du verre 62 des lunettes.

Dans le mode de réalisation illustré figures 8, 16 et 17, le contour 513 externe du verre 51 de l'écran 5 déborde d'une faible valeur ou distance 8 constante sur tout le pourtour du verre 51, par rapport au contour 623 du verre 62, lequel contour 623 correspond au tracé du bord ou de la tranche du verre 62, qui dans le mode de réalisation illustré figures 8 et 16, est biseauté et est logé dans une rainure (ou drageoire) 640, 650 respectivement prévue dans la partie 64 formant arcade de la monture et dans la partie 65 prolongeant l'arcade pour ceinturer le verre 62 de la paire de lunettes.

Selon une alternative non représentée, le contour externe 513 de l'écran 551 peut épouser le contour interne 641, 651 de la monture (arcade 64 et ceinture inférieure 65), pour être sensiblement au contact du verre 62 de lunette, et pour être, le cas échéant, logé dans l'épaisseur de la monture, c'est-à-dire sans être proéminent par rapport à la face frontale de la monture.

Par référence aux figures 1 et 2 notamment, ledit crochet comporte une première partie 2 d'extrémité, sensiblement rectiligne d'axe 20 et s'étendant sur une longueur 21, de préférence comprise entre 5 et 10 millimètres ; le crochet 1 comporte un coude 32 situé à l'extrémité de la première partie 2 et formant la liaison entre la première partie 2 et une deuxième partie 3 du crochet, sensiblement rectiligne d'axe 30 et de longueur 31, par exemple voisine de 5 à 10 millimètres ; cette deuxième partie 3 ou partie centrale du crochet se termine en partie droite de la figure 1 par un coude 33 de rayon de courbure 330, dont la valeur est de préférence au moins égale à l'épaisseur 100, 101 du corps allongé du crochet, en particulier voisine du double de cette épaisseur, et est par exemple de l'ordre de 1 à 2 millimètres.

Le coude 33 est prolongé par une troisième partie 4 formant une deuxième extrémité du crochet 1, qui est essentiellement constituée par un coude 41 de rayon de courbure 410, de préférence de valeur égale ou voisine de la valeur du rayon de courbure 330 du coude 33, les coudes 33 et 41 formant un « S », du fait de la courbure inversée de ces deux coudes successifs (figures 1, 11, 15, 18).

L'adaptation du crochet 1 à la géométrie particulière d'une monture et/ou d'un verre de lunette peut être obtenue par une découpe selon l'une des lignes en pointillés, repérée 22 pour ce qui concerne la première partie d'extrémité repérée 2 et repérée 42 pour ce qui concerne la deuxième partie d'extrémité repérée 4.

Comme illustré particulièrement aux figures 5 et 8, la première partie d'extrémité 2 du crochet 1, sert d'interface de fixation rigide du crochet 1 au verre 51 de l'écran 5, par collage, tandis que la deuxième partie d'extrémité 4 vient en appui contre une partie de la monture et/ou contre la face arrière 621 du verre 62 de la paire de lunettes.

Les parties d'extrémité 2 et 4 du crochet sont réunies par une partie centrale 3 déformable qui contribue à la capacité de déformation du crochet 1, permettant l'écartement des extrémités lors de l'opération de solidarisation ou de désolidarisation du crochet 1 sur la paire de lunettes.

En position de solidarisation de l'écran 5 sur la paire de lunettes, le crochet 1 chevauche (à la manière d'un cavalier ou d'une pince) une partie périphérique du verre 62 de lunette, comme représenté figure 5, ou bien une zone de l'arcade 64 et le cas échéant de la ceinture inférieure 65 de la monture de lunettes ; comme illustré figures 3 et 16 particulièrement, deux crochets 1 sont prévus en partie supérieure de l'écran 5, de manière à chevaucher l'arcade 64 et/ou la partie supérieure de la tranche du verre 62, à proximité immédiate du tenon 63 et respectivement du pontet 61, pour favoriser un positionnement correct de l'écran 5 par rapport à chacun des verres 62 de lunettes, dans une position sensiblement centrée par rapport à ceux-ci.

Par référence à la figure 10, un étui 9 comporte un compartiment 90 apte à recevoir une paire de lunettes dont les bras ont été préalablement repliés ; l'étui 9 comporte en outre plusieurs logements ou compartiments 91 supplémentaires, de taille et/ou de forme identique, aptes à recevoir chacun un écran 5 monoculaire adapté à la paire de lunettes destinée à être logée dans le compartiment 90 ; l'étui 9 comporte trois rangées de deux compartiments 91 identiques juxtaposés et séparés par une cloison 92.

Par référence aux figures 11, 15, 17 et 18 notamment, le crochet 1 comporte une première partie 2 d'extrémité, sensiblement rectiligne d'axe 20 et s'étendant sur une longueur 21 comprise entre 5 et 15 millimètres, en particulier voisine de 10 millimètres ; le crochet 1 comporte un coude 32 situé à l'extrémité d'une patte 27 formant la liaison entre la première partie 2 et une deuxième partie 3 du crochet, sensiblement rectiligne d'axe 30 et de longueur 31 ; cette deuxième partie 3 ou partie centrale du crochet se termine (en partie droite des figures) par un coude 33 de rayon de courbure 330.

Comme illustré particulièrement aux figures 15, 17 et 18, la première partie d'extrémité 2 du crochet 1, sert d'interface de fixation rigide du crochet 1 au verre 51 de l'écran 5, par emboîtage (ou emmanchement) d'une portion 26 de la partie 2 dans un orifice 5x prévu dans le verre 51.

Comme illustré figures 2 et 12, le corps 10 du crochet 1, peut être doté d'une section pleine de forme sensiblement rectangulaire ou carrée ; en particulier, la section transversale des parties 24 et 26 de l'extrémité 2 a une largeur 101 de l'ordre de 1 millimètre, une longueur (ou hauteur) 100 de l'ordre de 1 millimètre également ; la diagonale 109 peut être de valeur supérieure au diamètre 5y (de l'ordre de 1,2 millimètre) de l'orifice 5x prévu dans le verre.

Par référence aux figures 11 et 15 particulièrement, l'extrémité 2 comporte, disposés successivement le long de l'axe 20 :
- une portion d'extrémité 23 conique ou tronconique ou effilée, dont les faces 23b se terminent en une pointe 23a,
- une portion intermédiaire 24 sensiblement cylindrique et s'étendant selon l'axe 20, sensiblement dans le prolongement de ladite portion 26 apte à s'étendre dans l'orifice 5x, et sensiblement de même section transversale que celle-ci,
- une portion 25 située entre ladite portion 26 et ladite portion intermédiaire 24, et dans le prolongement selon l'axe 20 de ces portions 24, 26, qui comporte deux faces saillantes (par rapport aux portions 24, 26) inclinées 25b prolongées par une face 25c de raccordement formant une première butée déformable ou rétractable ; les deux extrémités des saillies 25b, 25c sont séparées d'une distance 25a qui est supérieure au diamètre 5y de l'orifice et supérieure à la plus grande dimension 26a, 109 de la portion 26 d'emboîtement,
- une portion 27 de liaison entre ladite portion 26 et ladite deuxième partie 3, qui comporte deux parties ou faces 27a formant des deuxièmes butées.

La pénétration sans effort de la partie effilée 23 dans l'orifice 5x résulte de ses dimensions transversales inférieures au diamètre de cet orifice ; la pénétration des parties 24, 26 dans l'orifice 5x est rendue possible par une contraction (radiale) de ces parties 24, 26, qui est corrélative à l'allongement des portions 24, 26 résultant d'une traction opérée sur la partie 23 de l'extrémité 2.

La longueur 29 de la portion 26 est par exemple voisine de 1 à 1,4 millimètre, et la longueur 21 de la première partie 2 est voisine de 10 à 15 millimètres ; la longueur cumulée 28 (par exemple de l'ordre de 6 millimètres) des portions 23 et 24 est supérieure à l'épaisseur 5z du verre 51, afin de faciliter la préhension de la portion 23 ou 24 (après son passage dans l'orifice 5z) par les mâchoires d'une pince, afin d'exercer une traction sur cette pointe pour faire passer la partie 25 comportant les parties 25b, 25c saillantes au travers de l'orifice ; ce passage qui correspond à la position du verre repérée 5b (figure 15) entraîne l'écrasement (repère 25d) des parties latérales saillantes de la partie 25, et son étirement longitudinal, jusqu'à ce que le verre 51 vienne en butée contre la partie 27, 27a, ce qui correspond à la position du verre repérée 5c figure 15 ; dans cette position d'emboîtage de la portion 26 qui s'étend à l'intérieur de l'orifice 5x, les parties et faces 25b, 25c de la butée déformables sont ressorties de l'orifice 5x ; les faces 25c s'appuient contre la face avant 510 du verre 51 et forme une butée empêchant le crochet de ressortir de l'orifice 5x ; on peut alors couper selon les pointillés 22 la partie 25, pour ne laisser subsister que la partie 25e faisant une petite saillie en face avant du verre 51.

Dans la réalisation illustrée figures 11 et 15, la longueur 29 - au repos - de la portion 26 d'emboîtement du crochet dans l'orifice 5x du verre, peut être inférieure à l'épaisseur 5z (qui est voisine de 1,5 à 1,8 millimètres) du verre 51, c'est à dire inférieure à la longueur ou profondeur de l'orifice 5x, de manière à ce qu'en position emboîtée (repère 5c figure 15), la portion 26 du crochet reste précontrainte en traction.

Dans la réalisation illustrée figure 18, la portion 25 de butée comporte plusieurs saillies 25b, 25c identiques juxtaposées, régulièrement disposées le long de l'axe 20 ; cette configuration convient particulièrement à des verres 51 d'écran d'épaisseur 5z importante, par exemple de l'ordre de 2 à 10 millimètres ; dans la position du verre 51 illustrée figure 18, qui est en appui par sa face arrière 511 contre la butée 27a, trois saillies écrasées 25d s'étendent à l'intérieur de l'orifice 5x prévu dans le verre 51 ; après coupure de la partie 25 selon le pointillé 22, subsiste une saillie 25e externe au verre 51 qui retient le crochet emboîté dans l'orifice ; une partie 998 située dans le prolongement selon l'axe 30 de la partie centrale 3, fait une saillie en avant de la face d'appui 27a formant butée ; cette partie 998 comporte une face 997 sensiblement perpendiculaire à la face 27a ; la face 997 s'étend en regard - et sensiblement au contact - d'une partie de la tranche 512 du verre 51 ; de ce fait, la face 997 et la partie 998 contribuent à empêcher la rotation selon l'axe 20 du crochet dans l'orifice 5x du verre 51, et contribue donc à la stabilité du montage par emboîtement du crochet, en complément des forces de frottement par contact des parties 26, 25d à l'intérieur de l'orifice 5x ; ce frottement est en outre favorisé par la conjonction de la forme anguleuse (carrée par exemple) de la section de la partie 26 d'emboîtement, avec la forme circulaire de l'orifice 5x.

Les deux coudes 33, 41 s'étendent selon deux angles respectifs 331, 411 dont la valeur est respectivement voisine de 180 degrés et 210 degrés ; ces deux coudes forment avec les parties 3 et 27 une boucle 996 (en forme de « R ») munie d'une ouverture 995 dont la largeur 999 peut varier d'une valeur (au repos) voisine de 1 à 2 millimètres à une valeur double ou triple au moins, par une déformation (illustrée en pointillés figure 15) sensiblement élastique des parties 3, 33 et 41 essentiellement, pour l'engagement ou le dégagement de la monture ou de la tranche du verre de lunette dans la boucle 996 et au travers de l'ouverture 995.

Le verre (monoculaire) de l'écran peut être doté d'un contour externe identique (tant en forme qu'en dimensions) au contour externe du verre de lunette contre lequel il doit être monté, particulièrement dans le cas où les lunettes comportent une monture percée ou interrompue, c'est-à-dire dont la monture ne comporte pas d'arcade reliant le nez (ou pontet) à une des branches.

Le verre de l'écran peut être alternativement doté d'un contour externe similaire au contour externe du verre de lunette, particulièrement dans le cas où les lunettes comportent une monture entourant (encerclant) chacun des deux verres de lunettes, par exemple une monture en matière plastique ; dans ce cas, la forme du contour de l'écran est identique à la forme du contour du verre de lunette, mais les dimensions de l'écran peuvent être différentes de celles du verre de lunette : le tracé du contour externe de l'écran peut être obtenu à partir du tracé du contour externe du verre de lunette correspondant (gauche ou droit), par addition d'une bande de largeur sensiblement constante, qui est de l'ordre de 0,5 millimètre à 2 millimètres, de préférence de l'ordre de 1 à 2 millimètres ; de la sorte, lorsque le verre et l'écran sont accolés, le contour externe du verre déborde (dépasse) du contour externe de l'écran, d'une valeur sensiblement constante égale à ladite largeur de bande.

Dans les deux cas, la forme est identique dans la mesure où, à titre d'exemple, un écran circulaire sera taillé (découpé) pour un verre circulaire ; dans le cas d'un verre dont le contour externe a une forme de quadrilatère curviligne (ou bien a une forme de rectangle dont les coins sont arrondis), l'écran correspondant aura respectivement une forme de quadrilatère curviligne (ou bien une forme de rectangle à coins arrondis).

La taille sur mesure de l'écran (gauche et droit) en fonction du verre correspondant (respectivement gauche et droit) est obtenue, comme décrit ci-après, de préférence après un mesurage préalable (direct ou indirect) du contour du verre de lunette : le mesurage est effectué par un palpeur (capteur), qui est de préférence connecté à un moyen électronique de traitement de données (ordinateur) ; un mesurage (ou relevé des cotes ou dimensions) du contour externe du verre de lunette peut être effectué directement sur le verre lui-même, ou bien indirectement, sur la monture ou bien sur un gabarit ; à partir du relevé du contour du verre qui est enregistré dans une mémoire électronique, une donnée relative à la surlargeur de l'écran par rapport au verre peut être introduite par l'opticien, ce qui permet au moyen électronique de traitement de données de déterminer la géométrie exacte souhaitée pour l'écran ; l'ordinateur peut alors commander le fonctionnement d'un outil de coupe (tel qu'une meule) de l'écran à la forme et aux dimensions exactes souhaitées ; alternativement, on taille (à l'aide d'une meule classique) l'écran à la forme d'un gabarit correspondant à la forme souhaitée.

Selon un aspect de l'invention, on fabrique un écran supplémentaire (rapporté) pour chaque verre (gauche et droit) de lunette par un procédé comportant les étapes successives suivantes :
a/ on relève un profil ou contour externe d'un des verres d'une paire de lunettes considérée (le profil ou contour du deuxième verre de lunette étant généralement obtenu ou déduit par symétrie) ou de la monture (ou d'un gabarit correspondant à cette monture déterminée),
b/ on taille (ou on meule) un écran monoculaire dans une ébauche d'un matériau de caractéristiques filtrantes et/ou optiques appropriées, selon un contour externe identique ou similaire à celui du verre - comme explicité ci-avant -,
c/ on positionne temporairement l'écran contre la monture et on repère les zones périphériques de l'écran correspondant aux zones optimales de fixation des crochets, lesquelles zones optimales correspondent généralement aux zones de l'écran qui - en position de montage - sont situées sensiblement en regard des tenons de la monture (c'est-à-dire la partie de la monture comportant le point d'attache des bras) d'une part, et en regard de la liaison entre l'arcade (partie surmontant un verre) et le pontet (partie de liaison des arcades ou des deux verres, destinée à reposer sur le nez du porteur des lunettes) ; on perce (par exemple avec un porte-foret manuel) trois orifices à la périphérie de l'écran en conservant un pont entre l'orifice et le contours externe de l'écran,
d/ on introduit une portion à emboîter prévue sur une partie d'extrémité d'un crochet, dans chaque orifice, par déformation d'une butée et en exerçant une traction sur ladite extrémité du crochet ; puis on coupe ou on sépare une partie de l'extrémité ayant traversé l'orifice en laissant subsister une saillie résiduelle.

Alternativement aux opérations a/ et b/ ci-dessus, si l'on dispose d'un gabarit de taille de verre qui est de forme adaptée à la monture de lunettes considérée, la taille de l'écran peut être effectuée à l'aide de ce gabarit.

Pour réaliser les opérations c/ et d/ ci-dessus, on peut utiliser un adhésif pour solidariser temporairement le verre taillé de l'écran au verre de lunette et/ou à la monture (ou à la paire) de lunettes.

Préalablement à l'opération d/, on choisit le cas échéant une ébauche de crochet parmi plusieurs ébauches disponibles, en fonction notamment de l'épaisseur du verre de lunette et/ou de la monture, puis on forme le crochet à partir de l'ébauche de crochet par découpe éventuelle de parties d'extrémité de l'ébauche (et du crochet), également pour adapter le crochet à la paire de lunettes.

Les verres rentrant dans la constitution des écrans monoculaires selon l'invention sont réalisés dans un matériau à base de silice, ou bien dans un matériau (dit verre) organique (CR 39) ou bien dans un matériau plastique de type polycarbonate.

## Revendications

1. Crochet monobloc déformable pour la solidarisation d'un écran (5, 51) monoculaire à des lunettes, qui comporte :
- une première partie (2) d'extrémité, apte à être fixée audit écran,
- une deuxième partie (3), dite partie centrale, qui est apte à chevaucher la tranche d'un verre ou une arcade de monture desdites lunettes, qui est terminée à une extrémité par un premier coude (33),
- un deuxième coude (32) de liaison entre ladite première partie (2) et ladite deuxième partie (3),
ledit crochet étant **caractérisé en ce qu'**il comporte en outre une troisième partie (4) formant une deuxième extrémité, apte à être placée au contact de la zone périphérique d'un verre ou d'une partie de la monture des lunettes, qui prolonge ledit premier coude (33) et qui comporté un troisième coude (41),
et **en ce que** lesdits premier et troisième coudes (33, 41) sont de courbure inversée.

2. Crochet selon la revendication 1, dans lequel ladite première partie (2) d'extrémité comporte une première portion (26) apte à s'étendre au travers d'un orifice (5x) prévu à la périphérie dudit écran.

3. Crochet selon la revendication 1 ou 2, qui est constitué d'une seule pièce en matière sécable.

4. Crochet selon la revendication 3, dans lequel ladite matière sécable est une matière plastique.

5. Crochet selon la revendication 4, dans lequel ladite matière plastique est du polyuréthane.

6. Crochet selon l'une quelconque des revendications 1 à 5, dans lequel lesdites parties d'extrémité (2, 4) sont de forme allongée et ont une section transversale dont l'aire est comprise entre 0,5 mm² et 5 mm².

7. Crochet selon l'une quelconque des revendications 2 à 6, qui comporte au moins une première butée (25c) rétractable et au moins une deuxième butée (27a) qui sont disposées de part et d'autre de ladite première portion (26).

8. Crochet selon l'une quelconque des revendications 2 à 7, essentiellement constitué par un corps (10) plein, dont ladite première partie (2) comporte :
- une pointe ou deuxième portion (23) d'extrémité conique ou tronconique ou effilée,
- une troisième portion (24) intermédiaire s'étendant sensiblement dans le prolongement de ladite première portion (26),
- une quatrième portion (25) située entre ladite première portion (26) et ladite troisième portion intermédiaire (24), qui comporte au moins une partie ou face saillante (25b, 25c) formant une première butée déformable ou rétractable,
- une cinquième portion (27) de liaison entre ladite première portion (26) et ladite deuxième partie (3), qui comporte au moins une partie ou face (27a) formant une deuxième butée.

9. Crochet selon l'une quelconque des revendications 2 à 8, dans lequel la longueur (29) de la première portion (26) est comprise entre 1 et 2 millimètres, et dans lequel la longueur (21) de la première partie (2) est comprise entre 5 et 15 millimètres.

10. Crochet selon l'une quelconque des revendications 1 à 9, dans lequel lesdits premier et troisième coudes (33, 41) s'étendent sur plus de 90°.

11. Crochet selon l'une quelconque des revendications 2 à 10, dans lequel la section de ladite première portion (26) d'emboîtement a une forme anguleuse.

12. Ecran (5) monoculaire pour lunettes, qui comporte au moins trois crochets selon l'une quelconque des revendications 1 à 11, qui sont fixés au verre (51) de l'écran par emboîtement dans un orifice (5x) respectif percé dans le verre.

13. Ecran selon la revendication 12, qui comporte trois crochets en matière plastique emboîtés sans être collés au verre, et dans lequel la longueur (29) au repos de la portion (26) d'emboîtement du crochet dans l'orifice (5x) du verre, est inférieure à l'épaisseur (5z) du verre (51), et dans lequel la plus grande dimension (107) au repos de la portion (26) d'emboîtement est supérieure au diamètre (5y) de l'orifice (5x).

## Patentansprüche

1. Einstückiger, verformbarer Haken zur Befestigung eines Monokular-Schirms (5, 51) an Brillen, umfassend:
- ein erstes Endteil (2), das an dem Schirm zu befestigen ist,
- ein zweites als Mittelteil bezeichnetes Teil (3), das den Rand eines Glases oder eines Fassungsbogens der Brille zu umgreifen vermag und an einem Ende in einer ersten Biegung (33) endet,
- eine zweite Biegung (32) zum Verbinden des ersten Teils (2) mit dem zweiten Teil (3),
**dadurch gekennzeichnet, dass** er ferner ein drittes Teil (4) umfasst, das ein zweites Ende bildet, welches in Kontakt mit dem Randbereich eines Glases oder eines Teils der Brillenfassung anzuordnen ist, und das die erste Biegung (33) verlängert und eine dritte Biegung (41) aufweist, und dass die erste und zweite Biegung (33, 41) entgegengesetzt gekrümmt sind.

2. Haken nach Anspruch 1,
bei dem das erste Endteil (2) ein erstes Stück (26) umfasst, das sich durch eine Öffnung (5x) zu erstrecken vermag, die am Rand des Schirms vorgesehen ist.

3. Haken nach Anspruch 1 oder 2,
der in einem einzigen Stück aus teilbarem Material gebildet ist.

4. Haken nach Anspruch 3,
bei dem das teilbare Material ein Kunststoff ist.

5. Haken nach Anspruch 4,
bei dem der Kunststoff Polyurethan ist.

6. Haken nach einem der Ansprüche 1 bis 5,
bei dem die Endteile (2, 4) eine längliche Form und einen Querschnitt haben, dessen Querschnittsfläche zwischen 0,5 mm² und 5 mm² liegt.

7. Haken nach einem der Ansprüche 2 bis 6,
der wenigsten einen ersten zurückziehbaren Anschlag (25c) und wenigstens einen zweiten Anschlag (27a) umfasst, die zu beiden Seiten des ersten Stücks (26) angeordnet sind.

8. Haken nach einem der Ansprüche 2 bis 7,
der im Wesentlichen durch einen massiven Körper (10) gebildet ist, dessen erster Teil (2) umfasst:
- eine Spitze oder ein konisches oder kegelstumpfartiges oder spitz zulaufendes zweites Endstück (23),
- ein drittes Zwischenstück (24), das im Wesentlichen in der Verlängerung des ersten Stücks (26) verläuft,
- ein zwischen dem ersten Stück (26) und dem dritten Zwischenstück (24) gelegenes viertes Stück (25), das wenigstens ein vorspringendes Teil oder eine vorspringende Seite (25b, 25c) aufweist, die einen ersten verformbaren oder zurückziehbaren Anschlag bildet,
- ein fünftes Stück (27) zum Verbinden des ersten Stücks (26) mit dem zweiten Teil (3), das wenigstens ein Teil oder eine Seite (27a) aufweist, die einen zweiten Anschlag bildet.

9. Haken nach einem der Ansprüche 2 bis 8,
bei dem die Länge (29) des ersten Stücks (26) zwischen 1 und 2 mm beträgt und bei dem die Länge (21) des ersten Teils (2) zwischen 5 und 15 mm beträgt.

10. Haken nach einem der Ansprüche 1 bis 9,
bei dem sich die erste und die zweite Biegung (33, 41) auf über 90° erstreckt.

11. Haken nach einem der Ansprüche 2 bis 10,
bei dem der Querschnitt des ersten Einsteckstücks (26) eine kantige Form hat.

12. Monokular-Schirm (5) für Brillen, der wenigstens drei Haken nach einem der Ansprüche 1 bis 11 umfasst, die am Glas (51) des Schirms durch Einstecken in eine entsprechende, in das Glas gebohrte Öffnung (5x) befestigt werden.

13. Schirm nach Anspruch 12, der drei am Glas ohne Kleben eingesteckte Haken aus Kunststoff umfasst, bei dem die Länge (29) des Stücks (26) des Hakens zum Einstecken in die Glasöffnung in Ruhestellung kleiner ist als die Dicke (5z) des Glases (51) und bei dem die größte Ausdehnung (107) des Einsteckstücks (26) größer ist als der Durchmesser (5y) der Öffnung (5x).

## Claims

1. An integral deformable hook for securing a monocular screen (5, 51) to eyeglasses, the hook including:
- a first end part (2) suitable for being fixed to said screen;
- a second central part (3), which is suitable for passing over the edge surface of a lens or an eyebrow portion of said eyeglass frame, which portion is terminated at one end by a first bend (33);
- a second bend (32) interconnecting said first part (2) and said second part (3);
said hook being **characterised in that** it further includes a third part (4) forming a second end, suitable for being placed in contact with the peripheral zone of a lens or of a part of the eyeglass frame, which extends said first bend (33) and which includes a third bend (41); and
**in that** said first and third bends (33, 41) curve in opposite directions.

2. A hook according to claim 1, in which said first end part (2) includes a first portion (26) suitable for extending through an orifice (5x) provided in the periphery of said screen.

3. A hook according to claim 1 or 2, constituted as a single piece of cuttable material.

4. A hook according to claim 3, in which said cuttable material is a plastics material.

5. A hook according to claim 4, in which said plastics material is polyurethane.

6. A hook according to any one of claims 1 to 5, in which said end parts (2, 4) are elongate in shape and are of cross-section having an area lying in the range 0.5 mm² to 5 mm².

7. A hook according to any one of claims 2 to 6, including at least a first abutment (25c) which is retractable and at least a second abutment (27a), the abutments being disposed on either side of said first portion (26).

8. A hook according to any one of claims 2 to 7, essentially constituted by a solid body (10) whose first part (2) includes:
- a conical, frustoconical, or tapering second end portion (23) or point;
- a third intermediate portion (24) extending substantially along the extension of said first portion (26);
- a fourth portion (25) situated between said first portion (26) and said third intermediate portion (24) and including at least one projecting face or part (25b, 25c) forming a first abutment that is deformable or retractable; and
- a fifth link portion (27) between said first portion (26) and said second part (3) and including at least one face or part (27a) forming a second abutment.

9. A hook according to any one of claims 2 to 8, in which the length (29) of the first portion (26) lies in the range 1 mm to 2 mm, and in which the length (21) of the first part (2) lies in the range 5 mm to 15 mm.

10. A hook according to any one of claims 1 to 9, in which said first and third bends (33, 41) extend over more than 90°.

11. A hook according to any one of claims 2 to 10, in which the section of said first engagement portion (26) is angular in shape.

12. A monocular screen (5) for eyeglasses, including at least three hooks according to any one of claims 1 to 11, which hooks are fixed to the lens (51) of the screen by engagement in a respective orifice (5x) pierced in the lens.

13. A screen according to claim 12, including three hooks of plastics material engaged without being stuck to the lens, and in which the length (29) at rest of the engagement portion (26) for engaging the hook in the orifice (5x) of the lens is shorter than the thickness (5z) of the lens (51), and in which the largest dimension (107) of the engagement portion (26) is greater, at rest, than the diameter (5y) of the orifice (5x).
